# DEMANDE DE BREVET EUROPEEN

(11) **EP 1 749 603 A1**
(43) Date de publication de la demande: **07.02.2007**
(21) Numéro de dépôt: 05300655.7
(22) Date de dépôt: 05.08.2005
(51) Int. Cl.: B23D 19/06, B23D 35/00

(54) **Installation de coupe longitudinale d'une bande mince**

(71) Demandeur: VAI COSIM, 28008 Madrid (ES)
(72) Inventeur: GOMEZ SEBASTIAN, Santiago, 28043 Madrid (ES); RAMAYO DIAZ-PALACIOS, Luis Enrique, 28320 Madrid (ES)
(74) Mandataire: Catherine, Alain

(57) **Abrégé**

L'invention a pour objet une installation de coupe longitudinale d'une bande mince (M) comportant deux cisailles de rives (20a, 20b) montées sur un bâti transversal (21).

Selon l'invention, l'installation comporte un dispositif de refendage (1) de la bande (M) en deux parties, comportant deux couteaux rotatifs (5, 5') montés respectivement sur deux traverses (11, 11') d'un châssis transversal en forme de cadre (10), qui est placé en amont, dans le sens de défilement, du bâti (21) portant les cisailles de rives (20a, 20b), chaque couteau de refendage (5, 5') étant porté par un bras de support (6, 6') s'étendant vers l'aval à partir de la traverse correspondante (11, 11') du cadre transversal (10), de façon que le cisaillage des rives et le refendage de la bande soient effectués simultanément et sensiblement dans un même plan (P2) transversal à l'axe de défilement (O) de la bande (M).

Le cadre (10) peut en outre se déplacer transversalement pour le réglage de la position du plan de refendage (P3).

## Description

L'invention a pour objet une installation de coupe longitudinale d'une bande mince dans une ligne continue de défilement de cette bande, suivant un axe longitudinal. L'invention couvre également un dispositif de refendage d'une telle bande mince dans une ligne continue.

Depuis un certain temps, les produits en bande, en particulier les bandes d'acier ou autres métal sont couramment produites dans des installations fonctionnant en ligne continue qui permettent de réaliser successivement plusieurs traitements, par exemple décapage, laminage à froid, recuit, dans une chaîne continue de fabrication. De telles installations permettent d'éviter une rupture de charge avec transfert d'une bobine d'une installation de traitement à la suivante, la productivité pouvant ainsi être considérablement augmentée.

La largeur des bandes qui peuvent être ainsi produites dépend des machines utilisées et peut, dans une certaine mesure, être modifiée mais, d'une façon générale, on a intérêt à produire, autant que possible, des bandes ayant la largeur maximale permise par les différentes machines de l'installation ou par le procédé.

Cependant, la largeur du produit peut légèrement varier au cours du traitement. En particulier, après laminage, les bords latéraux de la bande peuvent présenter des défauts et, habituellement, il est nécessaire de procéder, à la fin du traitement, à une opération dite de "dérivage" ou de "cisaillage des rives" dans laquelle les deux côtés latéraux de la bande sont coupés simultanément par deux cisailles de rives dont l'écartement peut être réglé de part et d'autre de l'axe longitudinal de défilement. Cette opération permet, d'une part, d'éliminer les rives pour obtenir un produit ayant une qualité homogène sur toute sa largeur et, d'autre part, de régler exactement à la dimension voulue la bande qui est ainsi limitée par deux bords parfaitement rectilignes et parallèles.

On connaît depuis longtemps des machines de dérivage utilisées, par exemple, dans les lignes de décapage ou de galvanisation et comportant, d'une façon générale, deux têtes de coupe montées sur un bâti transversal et dont l'écartement peut être réglé de part et d'autre de l'axe longitudinal de défilement, de façon à donner au produit fini la largeur souhaitée.

Cette possibilité de réglage en largeur du produit fini peut être relativement importante afin de répondre aux besoins de la clientèle mais, dans certains cas, l'utilisation finale demande, soit une mise en feuille, soit un enroulement en une bobine ayant une assez faible largeur adaptée à la ligne de formage finale servant à réaliser le produit commercial. Il en est ainsi, par exemple pour la production des tubes formés ou soudés ou la production de produits formés en grande longueur à partir de tôles laminées, tels que certains éléments de mobilier métallique ou, par exemple les rails de sécurité utilisés pour les équipements routiers. Dans ce cas, la largeur du produit fini est très inférieure à la largeur maximale permise par les machines dont on dispose et il est donc intéressant de produire tout d'abord une seule bande de grande largeur et de la diviser ensuite, dans le sens longitudinal, en plusieurs bandes de faible largeur.

Pour cette opération appelée "refendage", on connaît notamment des machines à têtes multiples permettant de fabriquer simultanément plusieurs rubans de faible largeur.

Afin de régler la largeur des différents rubans, le dispositif de refendage comporte, habituellement, un empilage de lames circulaires séparées par des entretoises qui déterminent la largeur de coupe. Etant donné que la précision demandée sur cette largeur est, habituellement très élevée, de l'ordre de quelques centièmes de millimètre, il est nécessaire d'avoir des têtes de coupe très rigides pour garantir cette précision et réaliser une coupe de qualité.

Par ailleurs, il faut tenir compte des problèmes de déformation par libération des contraintes internes à la bande. En effet, lorsque la bande produite en grande largeur est séparée en plusieurs rubans, la libération des tensions internes peut conduire à des bobineaux ayant des longueurs différentes. Pour résoudre les problèmes d'enroulement qui en résultent, on utilise habituellement des enrouleuses à mandrins multiples capables de maintenir la traction souhaitable dans tous les brins en cours de cisaillage.

Généralement, le refendage est donc réalisé dans des lignes spécifiques fonctionnant à faible vitesse.

De telles machines sont assez complexes et onéreuses et ne permettent pas une modification facile et rapide du réglage de la largeur des différents rubans, l'exploitation de ces machines se faisant, donc, par campagnes.

De plus, il est apparu qu'une part importante des produits demandés par la clientèle avait une largeur de l'ordre de la moitié de celle de la bande laminée à partir de laquelle ils sont fabriqués. Or, l'inventeur s'est avisé que, dans ce cas, il n'était pas économiquement très rentable d'utiliser une ligne spécifique de refendage, fonctionnant à une vitesse plus faible que la ligne de dérivage mais utilisée seulement pour une coupe centrale.

L'invention a pour objet de résoudre de tels problèmes grâce à une installation permettant de réaliser simultanément les deux opérations de dérivage et de refendage, en utilisant un dispositif de refendage particulièrement simple et peu onéreux.

L'invention concerne donc, d'une façon générale, une installation de coupe longitudinale d'une bande mince comportant des moyens de commande et de guidage du défilement de la bande suivant un axe longitudinal, un dispositif de dérivage avec deux cisailles de rives montées sur un bâti transversal de part et d'autre de l'axe longitudinal de défilement.

Conformément à l'invention, l'installation comporte un dispositif de refendage de la bande en deux parties, le long d'une ligne médiane parallèle à l'axe longitudinal de défilement, ce dispositif comportant deux couteaux rotatifs disposés de part et d'autre d'un plan de défilement de la bande et montés sur un châssis transversal en forme de cadre comportant deux traverses s'étendant transversalement à l'axe longitudinal de défilement, respectivement au-dessus et en dessous du plan de défilement de la bande et sur lesquelles prennent appui, respectivement les deux couteaux rotatifs de refendage, et ledit cadre transversal est placé en amont, dans le sens de défilement, du bâti portant les cisailles de rives, chaque couteau rotatif étant monté à l'extrémité d'un bras de support s'étendant en porte-à-faux vers l'aval à partir de la traverse correspondante du cadre transversal, de façon que le cisaillage des rives et le refendage de la bande soient effectués sensiblement dans un même plan transversal à l'axe de défilement.

De façon particulièrement avantageuse, les deux bras de support des couteaux de refendage sont fixés respectivement sur une partie centrale de chaque traverse, respectivement inférieure et supérieure, du cadre transversal, de façon que l'ensemble soit déplaçable en bloc transversalement pour le réglage de la position de la ligne de refendage par rapport à l'axe longitudinal de la bande.

A cet effet, le cadre de support est monté coulissant le long d'au moins deux chemins de guidage fixes, s'étendant transversalement à l'axe de défilement, à deux niveaux, respectivement inférieur et supérieur.

Dans un mode de réalisation préférentiel, le cadre transversal de support des couteaux de refendage repose, avec possibilité de coulissement, sur un chemin de guidage fixe ménagé au niveau inférieur du bâti de support des cisailles de rives, en amont de celui-ci et prend appui, par un organe de fixation coulissante, sur un rail de guidage ménagé sur un bâti fixe, au niveau de la partie supérieure du cadre transversal.

Habituellement, une telle installation comporte un bloc d'entrée comportant des moyens de décintrage et de décambrage de la bande, et monté dans un bâti fixe en amont, dans le sens de défilement, des cisailles de rives. Dans ce cas, selon une autre caractéristique particulièrement avantageuse de l'invention, le cadre transversal de support des couteaux de refendage est placé entre le bâti de support des cisailles de rives et le bâti du bloc d'entrée, ce dernier étant muni, au niveau voulu d'un rail de guidage de la partie supérieure du cadre transversal.

L'invention couvre également le dispositif de refendage comportant deux couteaux circulaires montés rotatifs, chacun, sur un support prenant appui, dans une position fixe, sur une partie centrale d'une traverse d'un cadre rectangulaire comportant deux traverses, respectivement supérieure et inférieure, fixées par leurs extrémités sur deux montants verticaux écartés l'un de l'autre d'une distance correspondant à la largeur maximale de la bande à laquelle est ajoutée une distance de réglage, ledit cadre rectangulaire étant monté coulissant transversalement à l'axe de défilement et associé à des moyens de commande de son coulissement sur ladite distance de réglage, pour le positionnement précis de la ligne de refendage d'un côté ou de l'autre de l'axe de défilement.

De préférence, ce positionnement précis de la ligne de refendage est réalisé au moyen d'un système à vis sans fin de déplacement transversal du cadre de support.

Par ailleurs, chaque couteau de refendage comporte un disque muni d'une lame circulaire centrée sur un axe orthogonal à l'axe longitudinal de défilement, au moins l'un des deux couteaux étant entraîné en rotation autour de son axe à une vitesse angulaire correspondant à la vitesse de défilement de la bande.

Selon une autre caractéristique préférentielle, chaque bras de support d'un couteau de refendage est monté pivotant sur la traverse correspondante du cadre transversal autour d'un axe orthogonal à l'axe de défilement de la bande et est associé à un moyen d'écartement du couteau du plan de défilement de la bande, par pivotement du bras de support autour de son axe.

A cet effet, chaque bras pivotant forme avantageusement un levier ayant une première partie s'étendant vers l'aval jusqu'à une première extrémité de support du couteau et une seconde partie s'étendant jusqu'à une seconde extrémité prenant appui, par pivotement du bras, sur une butée montée sur le cadre transversal et ayant un niveau variable pour le réglage de la profondeur de coupe du couteau rotatif.

Selon une autre caractéristique préférentielle, le moyen d'entraînement en rotation, autour de son axe, d'au moins l'un des deux couteaux circulaires, ainsi que les moyens de réglage de la profondeur de coupe desdits couteaux sont montés sur le cadre de support de façon à se déplacer avec celui-ci pour le positionnement des couteaux.

D'autres caractéristiques et avantages de l'invention apparaîtront au cours de la description suivante d'un mode de réalisation particulier, donné à titre d'exemple et représenté sur les dessins annexés.

La figure 1 est une vue de côté de l'ensemble d'une installation selon l'invention, en coupe selon un plan médian longitudinal P1.

La figure 2 est une vue de face partielle du dispositif de dérivage, en coupe transversale selon la ligne II-II de la figure 1.

La figure 3 est une vue de face partielle du dispositif de cisaillage de rives, en coupe transversale selon la ligne III-III de la figure 1.

La figure 4 est une vue de détail, à échelle agrandie, du dispositif de refendage.

La figure 5 est une vue de détail, en coupe selon la ligne IV-IV de la figure 4, montrant le montage du couteau inférieur.

La figure 6 est une vue en coupe axiale, à échelle agrandie, d'une cisaille de rives.

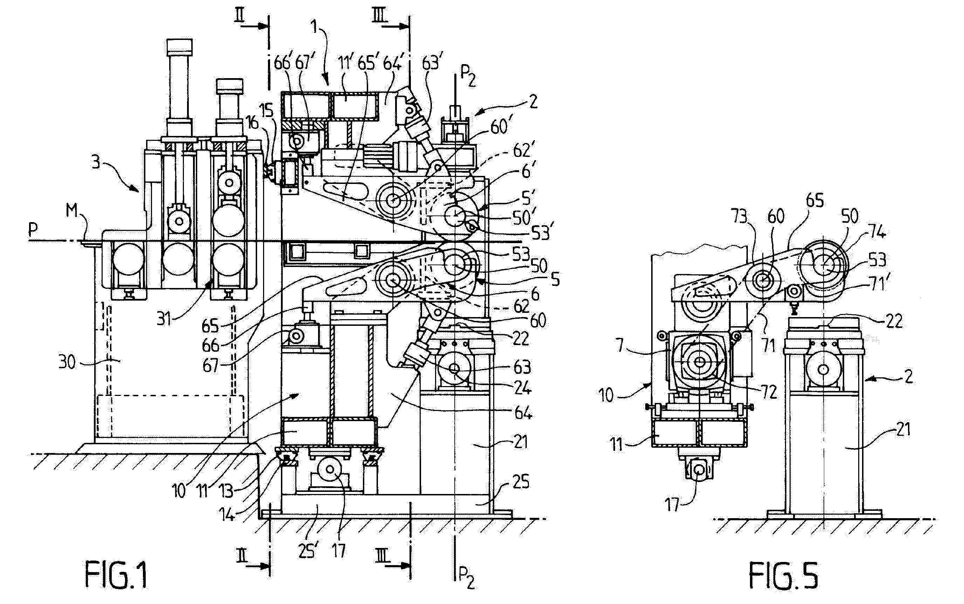

Sur la figure 1, on a représenté schématiquement, en coupe longitudinale, l'ensemble d'une installation selon l'invention, de coupe longitudinale d'une bande mince, comportant successivement, dans un sens de défilement de la bande M, un bloc d'entrée 3, un dispositif de refendage 1 et un ensemble de dérivage 2.

Sur la figure 1, la bande M est entraînée de la gauche vers la droite, suivant un plan de défilement P, par des moyens de commande de défilement non représentés.

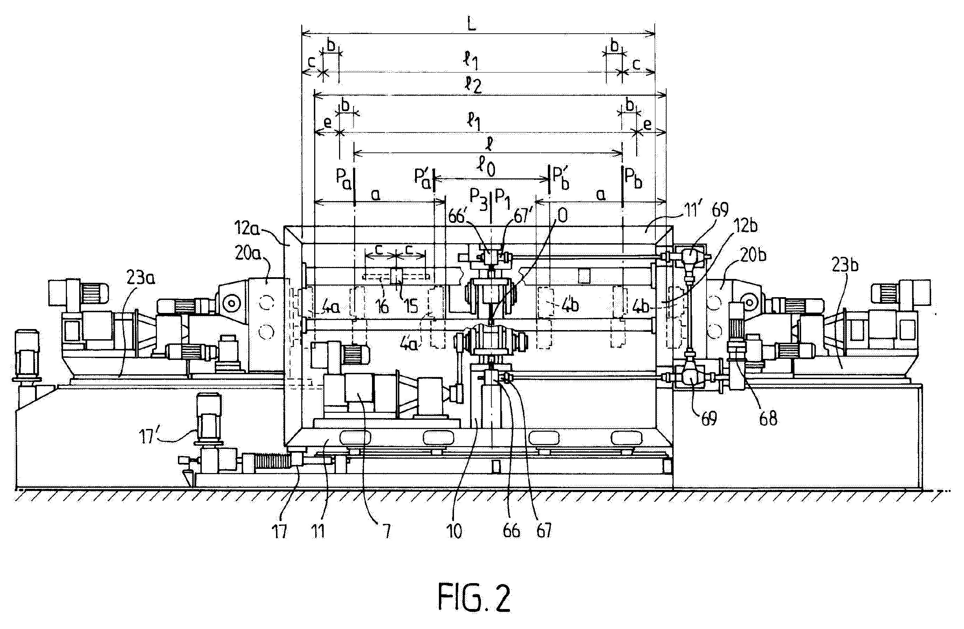

Le bloc d'entrée 3 qui comporte, habituellement, des moyens de décintrage et de décambrage de la bande, peut être de tout type classique et ne nécessite pas une description détaillée. Il comporte, d'une façon générale, plusieurs paires de rouleaux pinceurs 31 montés sur un bâti 30 et dont les positions peuvent être réglées, l'ensemble permettant d'aplanir et de guider la bande M en la maintenant centrée dans un plan médian longitudinal P1 (figure 2).

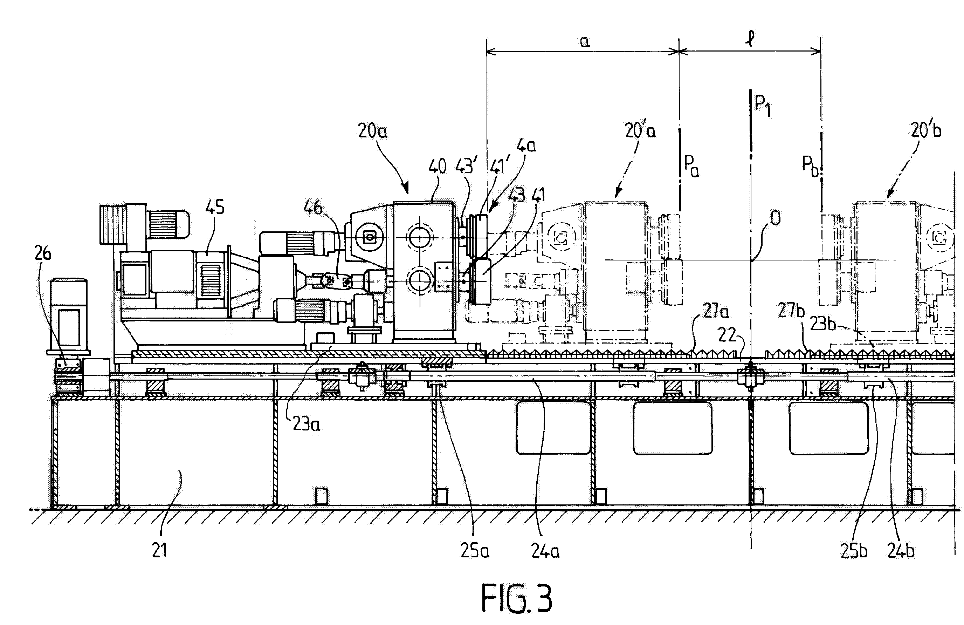

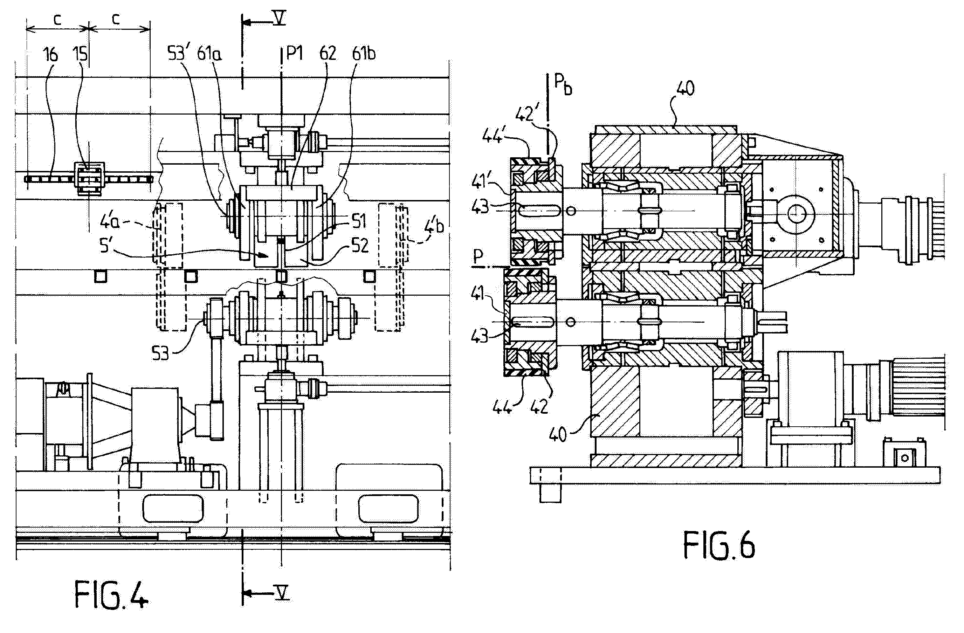

L'ensemble de dérivage 2 représenté sur la figure 3, est de type classique et comporte deux cisailles de rives 20a, 20b écartées symétriquement l'une de l'autre de part et d'autre du plan médian longitudinal P1 et montées rigidement sur un bâti transversal 21. Chaque cisaille de rives comporte un châssis 40 portant une tête de coupe 4 représentée en détail sur la figure 6 et comportant, d'une façon générale, deux couteaux rotatifs, respectivement inférieur 41 et supérieur 41', disposés de part et d'autre du plan P de défilement de la bande M et prenant appui, respectivement, sur les deux faces de celle-ci.

Comme le montre la figure 6, les deux couteaux rotatifs 41, 41' forment chacun un moyeu portant une lame circulaire 42, 42' et porté en bout d'un arbre 43, 43' monté rotatif sur le châssis 40 de la cisaille, autour d'un axe parallèle au plan P de défilement de la bande M et orthogonal à l'axe de défilement O. De façon connue, les moyeus 41, 41' sont montés sur excentriques de façon à régler la profondeur de coupe des lames circulaires 42, 42' qui définissent deux plans de coupe Pₐ et P_{b} écartés symétriquement de part et d'autre du plan médian longitudinal P1. Dans le mode de réalisation représenté, ce réglage par excentriques de la pénétration des couteaux est automatique et motorisé.

De façon classique, les lames circulaires 42, 42' des deux couteaux sont équipées de dévêtisseurs en élastomère 44, 44' permettant, juste après la coupe, de libérer la bande coupée du couteau et d'éviter ainsi un autre type de déformation.

La puissance nécessaire à la coupe pourrait être fournie par l'effort de traction appliqué sur la bande, les couteaux étant alors librement rotatifs. Cependant, pour ne pas déformer la bande lorsque celle-ci est de faible épaisseur, il est préférable de motoriser au moins l'un des couteaux de chaque tête de coupe. Dans l'exemple représenté, l'arbre 43 du couteau inférieur 41 est donc relié, par une allonge à cardans 44, à un moteur d'entraînement 45 qui est réglé de façon à commander la rotation du couteau 41 à une vitesse périphérique correspondant à la vitesse de défilement longitudinal de la bande.

Pour permettre le réglage de la largeur de la bande, l'ensemble de la cisaille 20 comportant le châssis 40 portant les deux couteaux 41, 41', des moyens de réglage de la profondeur de coupe, et les moyens d'entraînement 44, 45, est embarqué sur un chariot 23 pouvant coulisser le long d'une glissière 22 ménagée sur une partie supérieure du bâti de support 21 et orthogonale au plan médian longitudinal P1.

A l'intérieur de la partie supérieure du bâti 21, au-dessous de la glissière 22, est installé un système à vis-écrou de commande du déplacement des cisailles de rives 20a, 20b, comportant deux vis alignées à pas inversés 24a, 24b sur lesquelles engrènent deux écrous 25a, 25b solidaires, respectivement, des chariots 23a, 23b. Un moteur unique 26 monté sur le bâti 21, entraîne en rotation les deux vis 24a, 24b afin de commander des déplacements synchrones et symétriques, en sens inverse, des deux cisailles de rives 20a, 20b par rapport au plan médian longitudinal P1. Les deux cisailles de rives peuvent ainsi se déplacer symétriquement sur une distance (a), de chaque côté du plan médian P1, entre deux positions extrêmes, respectivement une position d'écartement maximal des têtes de coupe 4a, 4b représentées en trait plein sur les figures 2 et 3 et une position d'écartement minimal des têtes de coupe 4'a, 4'b représentées en trait interrompu.

Dans la position d'écartement minimal des têtes de coupe 4'a, 4'b, la distance entre les plans de coupe P'a, P'b correspond à la largeur minimale l₀ de la bande.

En revanche, dans la position d'écartement maximal, les têtes de coupe 4a, 4b doivent être écartées latéralement d'une distance l₂, correspondant à la largeur maximale l₁ de la bande, compte tenu de la largeur (b) des rives à éliminer, à laquelle s'ajoute, de chaque côté, une distance (e) nécessaire aux manoeuvres de démontage et de remontage des têtes de coupe 4a, 4b (Figure 2).

Un générateur d'impulsion monté en bout des vis 24 permet de contrôler la position des têtes de coupe 4a, 4b afin de régler la distance 1 entre les plans de coupe Pa, Pb à la largeur souhaitée pour la bande.

Des soufflets de protection 27 sont tendus entre chaque chariot 23 et un point fixe, à proximité du plan médian P1, afin de protéger la glissière 22 contre les risques de pollution ou de détérioration, lors des déplacements des deux chariots 23a, 23b.

Selon l'invention, l'installation comporte également un dispositif de refendage 1 disposé entre le bloc d'entrée 3 et le dispositif de dérivage 2, de la façon indiquée sur la figure 1.

Ce dispositif de refendage est placé dans un châssis en forme de cadre rectangulaire 10 comportant deux traverses horizontales écartées 11, 11' reliées par des montants latéraux 12a, 12b.

La traverse inférieure 11 1 du cadre 10 repose, par des patins linéaires à billes 13, sur des glissières 14 fixées sur une partie arrière 25' d'un socle 25 sur lequel est fixé le bâti 21 du dispositif de dérivage.

Le dispositif de refendage 1 comporte, de façon classique, deux couteaux rotatifs, respectivement inférieur 5 et supérieur 5', placés de part et d'autre du plan P de défilement de la bande M et constitués chacun, comme représenté sur la figure 4, d'une lame circulaire 51 placée entre des dévêtisseurs en néoprène 52, l'ensemble étant monté sur un arbre 53, 53' tournant autour d'un axe 50, 50' parallèle au plan de défilement P.

Une telle tête de coupe peut être de tout type connu et ne nécessite pas une description détaillée.

Toutefois, habituellement, une machine de refendage présente plusieurs têtes de coupe montées sur un même arbre de rotation afin de réaliser simultanément plusieurs rubans de faible largeur, l'écartement entre les têtes de coupe pouvant être réglé par des entretoises.

L'invention, au contraire, est prévue pour diviser la bande laminée M en une ou deux bandes de largeur déterminée et comporte, de ce fait, une seule tête de coupe constituée des deux couteaux rotatifs 5, 5' montés dans la partie centrale du cadre de support 10 dans une position transversale fixe, le réglage de la position de la ligne de coupe par rapport au plan médian longitudinal P1 étant effectué par déplacement transversal de l'ensemble du cadre 10 sur son chemin de roulement 13.

Comme indiqué plus haut, ce cadre 10 de support du dispositif de refendage est disposé en amont, dans le sens de défilement, du dispositif de dérivage 2 mais la coupe de refendage est réalisée sensiblement dans le même plan transversal P2 que le cisaillage des rives effectué en même temps par les deux têtes de coupe 4, 4' décrites plus haut.

A cet effet, comme le montre la figure 1, chaque couteau rotatif 5, 5' est monté à l'extrémité d'un bras 6, 6' formant un levier monté rotatif sur un arbre tournant autour d'un axe 60, 60' orthogonal à l'axe de défilement 0 et s'étendant en porte-à-faux vers l'aval de façon que les axes de rotation 50, 50' des deux couteaux 5, 5' soient sensiblement dans le même plan P2 que les axes de rotation des couteaux 41, 41' des deux cisailles de rives 4, 4'.

Comme le montre la figure 4, chaque bras 6, 6' de support d'un couteau de refendage 5, 5' comporte deux parties écartées 61 a, 61 b reliées par une entretoise 62, et portant, à leurs extrémités, les paliers de centrage de l'arbre 53, 53' de support du couteau 5, 5'.

Mais une telle installation peut aussi permettre d'effectuer uniquement un cisaillage des rives, sans refendage de la bande dans sa partie centrale. Pour cela, chaque couteau 5, 5' peut être écarté du plan P de défilement de la bande par un vérin pneumatique ou hydraulique 63, 63' articulé à ses extrémités, respectivement sur l'entretoise 62, 62' du bras 6, 6' autour de leurs axes 60, 60', et sur une partie de support 64, 64' fixée dans la partie centrale du cadre 10, respectivement sur l'entretoise inférieure 11 ou l'entretoise supérieure 11'.

Les deux vérins 63, 63' commandent ainsi le pivotement des deux bras 6, 6' entre une position de coupe pour laquelle les couteaux 5, 5' viennent au contact de la bande M et une position écartée permettant le défilement de la bande sans coupe centrale. Pour régler avec précision la pénétration des couteaux, chaque levier 6, 6' est prolongé, du côté opposé à l'axe de rotation 60, 60', par un bras arrière 65, 65' qui, dans la position de coupe, vient prendre appui sur une butée réglable 66, 66' constituée d'un vérin mécanique à faible course, réglé par un système à vis sans fin 67, 67' et permettant un réglage fin de la pénétration des couteaux 5, 5' selon l'épaisseur de la bande M à couper. A cet effet, les deux vis 67, 67' sont entraînées en rotation, dans un sens ou dans l'autre, par un moto-réducteur 68, au moyen de renvois d'angle et de tringleries 69 représentés schématiquement sur la figure 2.

Comme indiqué plus haut, le cadre 10 de support des têtes de refendage 5, 5' est porté sur des glissières 14 par des patins à billes 13 à guidage linéaire et peut ainsi se déplacer transversalement sur une partie arrière 25' du socle 25 de support du bâti 21 des cisailles de rives.

A sa partie supérieure, le cadre 10 porte également des patins à billes 15 à guidage linéaire coulissant transversalement le long de glissières fixes 16 qui peuvent avantageusement être ménagées sur la partie supérieure du bâti 30 du bloc d'entrée 3.

Un système à vis sans fin 17 monté sur le socle 25', au-dessous de l'entretoise inférieure 11 et actionné par un ensemble moto-réducteur 17', permet un positionnement précis du plan de coupe P3 des couteaux 5, 5', sur une distance de réglage (c) de part et d'autre de la position centrale représentée sur les figures 2 et 4 pour laquelle le plan de coupe P3 coïncide avec le plan médian longitudinal P1 dans lequel est placé l'axe de défilement O de la bande.

De ce fait, la largeur L de passage entre les montants 12a, 12b du cadre de support 10 doit être au moins égale à la largeur maximale l₁, de la bande à laquelle s'ajoute, de chaque côté la distance de réglage c.

Selon une autre caractéristique de l'invention, au moins l'un des deux couteaux, de préférence le couteau inférieur 5, est entraîné en rotation par un moteur 7, par l'intermédiaire d'un système de transmission permettant la rotation du bras 6 autour de son axe 60. La figure 5 montre, à titre d'exemple, un tel système d'entraînement comportant deux courroies 71, 71' tendues entre des poulies 72, 73, 74 centrées respectivement sur l'axe de rotation du moteur 7, l'axe 60 de pivotement du bras 6, et l'axe 50 de rotation du couteau 5.

La disposition qui vient d'être décrite permet donc de réaliser simultanément, dans un même plan transversal P2, le cisaillage des rives et le refendage de la bande suivant trois lignes de coupe dont les positions relatives peuvent être réglées avec précision, par rapport à l'axe longitudinal de défilement O, respectivement les deux lignes de coupe latérales par déplacement symétrique des chariots 23a, 23b sur le bâti transversal 21, et une ligne de coupe centrale, par déplacement transversal du cadre de support 10 qui est lié au socle fixe 25' et au bâti 30 du bloc d'entrée 3 par des fixations coulissantes 13, 15 permettant de rigidifier l'ensemble.

Une telle disposition permet donc de réaliser simultanément les coupes latérales et la coupe centrale sans risque de froisser les bandes, même pour de faibles épaisseurs. En effet, du fait que la tête de refendage est fixée sur le cadre de support monté coulissant transversalement en prenant appui sur des bâtis fixes, l'ensemble est particulièrement rigide et permet un réglage très précis et très fiable de la position des deux lignes de cisaillage des rives et de la ligne centrale de refendage.

Ainsi, alors que, jusqu'à présent, il semblait nécessaire de réaliser le refendage à une vitesse plus faible que le cisaillage des rives et d'utiliser une machine spécifique, l'installation selon l'invention permet d'effectuer simultanément la coupe centrale et les coupes latérales dans une même installation et à une même vitesse de défilement relativement élevée.

Cependant, l'invention ne se limite pas aux dispositions qui viennent d'être décrites à titre de simple exemple et pourraient faire l'objet de variantes, notamment par l'emploi de moyens équivalents, sans s'écarter du cadre de protection de l'invention.

Par exemple, d'autres moyens pourraient être employés pour le positionnement de la ligne de refendage, le réglage de la profondeur de coupe ou l'entraînement des couteaux.

D'autre part, il est préférable de commander la rotation, autour de leur axe, de l'un des couteaux de cisaillage de rive et de refendage mais, à rotation libre dans une installation plus simple et moins onéreuse, la coupe pouvant être réalisée au moyen de couteaux, par simple entraînement de la bande, les risques de déviation étant diminués, du fait que le refendage et le cisaillage des rives sont réalisés dans un même plan transversal P2 décalé en aval de l'axe des bras de support 6, 6'.

## Revendications

1. Installation de coupe longitudinale d'une bande mince (M) comportant des moyens de commande et de guidage du défilement de la bande (M) suivant un axe (O) placé dans un plan médian longitudinal (P1) et un dispositif (2) de coupe simultanée des côtés latéraux de la bande, comportant deux cisailles de rives (4a, 4b) montées sur un bâti transversal (21) de part et d'autre de l'axe longitudinal de défilement (O) **caractérisée par le fait qu'**elle comporte un dispositif de refendage (1) de la bande (M) en deux parties, suivant un plan (P3) parallèle à l'axe longitudinal de défilement (O), comportant deux couteaux rotatifs (5, 5'), disposés de part et d'autre d'un plan P de défilement de la bande, et montés dans un châssis transversal en forme de cadre (10) comportant deux traverses (11, 11') s'étendant transversalement à l'axe longitudinal de défilement (O), respectivement au-dessus et en dessous du plan de défilement (P) de la bande (M) et sur lesquelles prennent appui, respectivement les deux couteaux rotatifs de refendage (5, 5'), que ledit cadre transversal (10) est placé en amont, dans le sens de défilement, du bâti (21) portant les cisailles de rives (20a, 20b), et que chaque couteau de refendage (5, 5') est monté rotatif à l'extrémité d'un bras de support (6, 6') s'étendant en porte-à-faux vers l'aval à partir de la traverse correspondante (11, 11') du cadre transversal (10), de façon que le cisaillage des rives et le refendage de la bande soient effectués simultanément et sensiblement dans un même plan (P2) transversal à l'axe de défilement (O).

2. Installation de coupe selon la revendication 1, **caractérisée par le fait que** les deux bras (6, 6') de support des couteaux de refendage (5, 5') sont fixés respectivement sur une partie centrale des deux traverses (11, 11') du cadre transversal (10) et que l'ensemble est déplaçable en bloc par coulissement le long d'au moins deux chemins de guidage fixes (13, 14) (15, 16), s'étendant transversalement à l'axe de défilement (O), à deux niveaux, respectivement inférieur et supérieur du cadre transversal (10), pour le réglage de la position du plan de refendage P3 par rapport au plan médian longitudinal (P1) de la bande (M).

3. Installation de coupe selon la revendication 2, **caractérisée par le fait que** le cadre transversal (10) de support des couteaux de refendage (5, 5') repose, avec possibilité de coulissement, sur un chemin de guidage fixe (14) ménagé au niveau inférieur (25') du bâti (21) de support des cisailles de rives (20a, 20b), en amont de celui-ci et prend appui, par un organe de fixation coulissante (15), sur un chemin de guidage (16) ménagé sur un bâti fixe (30), au niveau de la partie supérieure du cadre transversal (10).

4. Installation de coupe selon la revendication 3, comprenant un bloc d'entrée (3) monté dans un bâti fixe (30) en amont, dans le sens de défilement, des cisailles de rives (20a, 20b), **caractérisée par le fait que** le cadre transversal (10) de support des couteaux de refendage (5, 5') est placé entre le bâti (21) de support des cisailles de rives (20a, 20b) et le bâti (30) du bloc d'entrée (3), et que ce dernier est muni, au niveau voulu, d'un chemin de guidage (16) de la partie supérieure du cadre transversal (10).

5. Installation de coupe selon l'une des revendications 2, 3, 4, **caractérisée par le fait qu'**elle comprend un système (17, 17') à vis sans fin de déplacement transversal du cadre de support (10) pour le positionnement précis du plan de refendage (P3) par rapport au plan médian longitudinal (P1) de la bande (M).

6. Installation de coupe selon l'une des revendications précédentes, **caractérisée par le fait que** chaque couteau de refendage (5, 5') comporte un disque muni d'une lame circulaire (51) centrée sur un axe (50) orthogonal à l'axe longitudinal de défilement (O), au moins un (5) des deux couteaux de refendage étant entraîné en rotation autour de son axe à une vitesse angulaire correspondant à la vitesse de défilement de la bande (M).

7. Installation de coupe selon l'une des revendications précédentes, **caractérisée par le fait que** chaque bras (6, 6') de support d'un couteau de refendage (5, 5') est monté pivotant sur la traverse (11, 11') correspondante du cadre transversal (10), autour d'un axe (60, 60') orthogonal à l'axe de défilement (O) de la bande (M) et associé à un moyen (63, 63') d'écartement du couteau (5, 5') du plan P de défilement de la bande (M), par pivotement du bras de support (6, 6') autour de son axe.

8. Installation de coupe selon la revendication 7, **caractérisée par le fait que** chaque bras pivotant (6, 6') de support d'un couteau de refendage (5, 5') forme un levier (65, 65') ayant une première partie s'étendant vers l'aval jusqu'à une extrémité avant de support du couteau (5, 5') et une seconde partie (65, 65') s'étendant jusqu'à une seconde extrémité prenant appui, par pivotement du bras (6, 6') sur une butée (66, 66') montée sur le cadre transversal (10) et ayant un niveau variable pour le réglage de la profondeur de coupe du couteau rotatif (5, 5').

9. Dispositif de refendage d'un produit en bande continue (M) défilant le long d'un plan de défilement (P), suivant un axe O placé dans un plan médian longitudinal P1 de la bande, comportant deux couteaux circulaires (5, 5') montés rotatifs chacun autour d'un axe (50, 50') orthogonal à l'axe de défilement O, et disposés de part et d'autre d'un plan longitudinal de coupe (P3) de façon à prendre appui sur les deux faces, respectivement supérieure et inférieure de la bande (M) pour la coupe longitudinale de celle-ci suivant un plan de refendage (P3) parallèle au plan médian longitudinal (P1) de la bande, **caractérisé par le fait que** les deux couteaux circulaires (5, 5') sont montés rotatifs chacun sur un support (6, 6') prenant appui, dans une position transversale fixe, sur une partie centrale d'une traverse d'un cadre rectangulaire (10) comportant deux traverses, respectivement supérieure (1 1') et inférieure (11), fixées par leurs extrémités sur montants verticaux (12a, 12b), et que ledit cadre rectangulaire (10) est monté coulissant transversalement à l'axe de défilement O et associé à des moyens (17) de commande du coulissement du cadre (10) sur une distance de réglage (c), pour le positionnement précis du plan de refendage (P3) d'un côté ou de l'autre de l'axe de défilement O.

10. Dispositif de refendage selon la revendication 9, **caractérisé par le fait que** les deux montants verticaux (12a, 12b) sont écartés l'un de l'autre d'une distance L correspondant à la largeur maximale l₁ de la bande à laquelle est ajoutée, de chaque côté, une distance (c) de réglage de la position du plan de refendage (P3) d'un côté ou de l'autre du plan médian longitudinal (P1) de la bande (M).

11. Dispositif de refendage selon l'une des revendications 9 et 10, **caractérisé par le fait qu'**il comprend un moyen (7, 71, 71') d'entraînement en rotation autour de son axe d'au moins l'un (5) des deux couteaux circulaires, ledit moyen d'entraînement étant monté sur le cadre de support (10) de façon à se déplacer avec celui-ci pour le positionnement des couteaux (5, 5').

12. Dispositif de refendage selon l'une des revendications 9 à 11, **caractérisé par le fait qu'**il comprend des moyens (66, 67) de réglage de la profondeur de coupe des couteaux circulaires (5, 5'), montés sur le cadre de support (10) de façon à se déplacer avec celui-ci pour le positionnement des couteaux (5, 5').

13. Dispositif de refendage selon l'une des revendications 9 à 12, **caractérisé par le fait que** chaque couteau circulaire (5, 5') est monté à une extrémité d'un bras (6, 6') monté pivotant sur le cadre rectangulaire (10) autour d'un axe (60, 60') orthogonal à l'axe de défilement (O), et associé à un moyen (63, 63') de commande du pivotement du bras (6, 6') dans un sens d'écartement du couteau (5, 5') du plan de défilement ou de rapprochement vers ledit plan P en position de coupe.

14. Dispositif de refendage selon la revendication 13, **caractérisé par le fait qu'**il comprend un moyen (7) d'entraînement en rotation d'au moins l'un des couteaux (5) autour de son axe (50), comportant un moteur (7) monté sur le cadre de support (10) et relié au couteau par un système de transmission (71, 71') permettant la rotation du bras (6) autour de son axe de pivotement (60).
